# EUROPEAN PATENT SPECIFICATION

(11) **EP 1 012 940 B1**
(45) Date of publication and mention of the grant of the patent: **18.11.2009**
(21) Application number: 97932546.1
(22) Date of filing: 10.07.1997
(51) Int. Cl.: H02H 3/08

(54) **CIRCUIT PROTECTION ARRANGEMENTS**
SCHUTZSCHALTUNGSANORDNUNGEN
DISPOSITIF DE PROTECTION DE CIRCUIT

(30) Priority: 16.07.1996 US 682067
(43) Date of publication of application: 28.06.2000
(73) Proprietor: RAYCHEM CORPORATION, Menlo Park, CA 94025-1164 (US); EWD L.L.C., Detroit, MI 48083 (US)
(72) Inventor: MYONG, Inho, Newark, CA 94560 (US); BROWN, Michael, Clawson, MI 48017 (US); BURCICKI, Douglas, A., New Baltimore, MI 48047 (US); DEGRENDEL, Glen, A., Sterling Heights, MI 48312 (US)
(74) Representative: Lampe, Sigmar
(86) International application number: PCT/US1997/011903
(87) International publication number: WO 1998/002946

(56) References cited:
- FR-A- 2 294 538
- US-A- 2 376 658
- US-A- 4 019 097

## Description

This invention relates to electrical circuit overcurrent protection. Positive temperature coefficient (PTC) circuit protection devices are well known. The device is placed in series with a load, and under normal operating conditions is in a low temperature, low resistance state. However, if the current through the PTC device increases excessively, and/or the ambient temperature around the PTC device increases excessively, and/or the normal operating current is maintained for more than the normal operating time, then the PTC device will be "tripped," i.e. converted to a high temperature, high resistance state such that the current is reduced substantially. Generally, the PTC device will remain in the tripped state, even if the current and/or temperature return to their normal levels, until the PTC device has been disconnected from the power source and allowed to cool. Particularly useful PTC devices contain a PTC element which is composed of a PTC conductive polymer, i.e. a composition which comprises (1) an organic polymer, and (2) dispersed, or otherwise distributed, in the polymer, a particulate conductive filler, preferably carbon black. PTC conductive polymers and devices containing them are described, for example in U.S. Patent Nos. 4,237,441, 4,238,812, 4,315,237, 4,317,027, 4,426,633, 4,545,926, 4,689,475, 4,724,417, 4,774,024, 4,780,598, 4,800,253, 4,845,838, 4,857,880, 4,859,836, 4,907,340, 4,924,074, 4,935,156, 4,967,176, 5,049,850, 5,089,801 and 5,378,407.

US 4 019 097 discloses a circuit breaker including a flux transfer trip mechanism and a solid state passive overcurrent sensing device having a temperature-dependent switching resistor.

In a batch of PTC devices made by the same manufacturing process, uncontrollable variations in the process can cause substantial variation in the conditions which will trip any individual device. The largest steady state current which will not cause any of the devices in the batch to trip is referred to herein as the "pass current" (I_{PASS}) or "hold current", and the smallest steady state current which will cause all of the devices to trip is referred to as the "trip current" (I_{TRIP}). In general, the difference between I_{PASS} and L_{TRIP} decreases slowly as the ambient temperature increases. Depending on the particular type of device, I_{TRIP} may for example be 1.5 to 2.5 times I_{PASS} at 20°C. For any individual device, the pass current and the trip current are the same. However, in this specification, reference is made to a PTC device having an I_{PASS} and a different I_{TRIP}, because as a practical matter, the manufacturer of an electrical switch must make use of PTC devices taken from a batch of such devices. Generally, the higher the ambient temperature, the lower the pass current and the trip current. This phenomenon is referred to as "thermal derating", and the term "derating curve" is used to denote a graph of temperature against pass current.

A limitation on the known uses of PTC protection devices is that when a PTC device is placed in series with the load and sized to conduct the normal circuit current, the PTC device can take a relatively long time to convert to its tripped state on an overcurrent which is, e.g., up to a few times the normal circuit current.

The invention provides a new overcurrent protection system which will give a rapid response to even relatively small overcurrents. In the new system, a sensor element and circuit interruption element are placed in series with the load. The sensor element is functionally linked to the circuit interruption element via a control element, so that, when the current in the circuit exceeds a predetermined amount, the sensor element senses the overcurrent and communicates with the control element. The control element causes the circuit interruption element to change from a relatively conductive normal state to a relatively non-conductive fault state (including a completely open state). The invention also provides a new relay assembly which is useful in circuit protection arrangements including circuit protection arrangements of the invention. The new relay assembly, comprises a wiper and an electrical contact. When the wiper is in contact with the relay contact, thereby making a connection, the wiper will open the connection when a current through the connection exceeds a predetermined current amount.

In an example of a preferred embodiment of circuit arrangements of the invention, the sensor element comprises a resistive device connected in series with the load, and the control element comprises a PTC device which is thermally linked to the resistive device and is electrically connected to the circuit interruption element. When an overcurrent passes through such a system, the resistive device increases in temperature causing the PTC device to heat up and trip to its high resistance state. The PTC device is linked to the circuit interruption element so that the increased resistance of the PTC device causes the circuit interruption element to switch into its fault state. The PTC device is not placed in series with the load and therefore may operate at current levels much less than the normal circuit current which passes through the load.

The thermal linking of a resistive device with a PTC device is known in the art. A current to be measured and/or controlled passes through the resistive device. I²R heating of the resistive device causes the PTC device to heat up and its resistance increases accordingly. Such resistive devices may comprise resistors, heaters, high resistance wire (e.g. NiChrome), PTC devices and the like. It is known that in order to obtain the desired current/temperature performance of such combinations, certain characteristics of the resistive device must be controlled, particularly in the zone adjacent to the PTC device. Some of the characteristics to be controlled include the resistivity, shape and cross sectional area of the material. The resistive device should be chosen to minimize system impedance while achieving sufficient temperature rise under overcurrent conditions to cause the PTC device to heat up and trip to its high impedance state.

In a second example of a preferred embodiment of the invention, the sensor element comprises a resistive device connected in series with the load, and the control element comprises a bimetal switch which is thermally linked to the resistive device and is electrically connected to the circuit interruption element. When an overcurrent passes through such a system, the resistive device increases in temperature causing the bimetal switch to heat up and trip to its open state. The bimetal switch is linked to the circuit interruption element so that the open condition of the bimetal switch causes the circuit interruption element to switch to its fault state. The bimetal switch is not placed in series with the load and therefore may operate at current levels much less than the normal circuit current which passes through the load.

In a third example of a preferred embodiment of the invention, the function of the sensor element is provided by a bimetal switch which is placed in series with the parallel combination of the load and the control element. When an overcurrent passes through such a system, the bimetal switch increases in temperature and trips to its open state. The control element senses the state change of the sensor element and causes the circuit interruption element to switch to its fault state.

In an example of a second preferred embodiment of the invention, the functions of the sensor element and circuit interruption element are combined in a sensor-interrupt element and are provided by a relay having a new bimetal wiper which, itself, is an aspect of the invention. When the relay is energized, the bimetal wiper of the relay is placed in series with the parallel combination of the load and the control element. When an overcurrent passes through such a system, the bimetal wiper disengages from the relay contact thereby breaking the circuit to the load and the control element. The control element causes the sensor-interrupt element to latch open in the fault state.

Thus, the present invention provides an electrical protection system which can be connected between an electrical power supply and an electrical load to form an operating circuit, the operating circuit having an on state and an off state and comprising a current carrying line and a return line and which when so connected protects the circuit from over currents, the system having a normal operating condition and a fault condition, and comprising:
a. a circuit interruption element which, when the system is so connected and is in its normal operating condition, is connected in series between the power supply and the load so that an operating current passes through the circuit interruption element and the load, and which has
   i. a closed state which permits the flow of a normal operating current between the power supply and the load when the system is in normal operating condition and
   ii. an open state which permits the flow of substantially no operating current, between the power supply and the load when the system is in the fault condition;
b. a sensor element which, when the system is so connected and is in its normal operating condition, is connected in series with the circuit interruption element and the load so that the operating current passes through the circuit interruption element, the sensor element and the load and which has
   i. a normal state, when the operating current in the system does not exceed the normal operating current by a predetermined amount, and
   ii. a fault state, when the operating current in the system exceeds the normal operating current by the predetermined amount;
      characterized in that it additionally comprises:
c. a control element which, when the system is so connected, is responsively coupled with the sensor element and is controllably coupled with the circuit interruption element, and has an electrical characteristic which
   i. is low impedance when the sensor element is in the normal state,
   ii. is high impedance when the sensor element has the fault state, and
   iii. remains at high impedance until the system is reset to the normal operating condition; and
d. swith coupled to the control element for resetting the system
   from the fault condition to the normal operating condition; the circuit interruption element changing from its closed state to its open state, thereby causing the system to change from its normal operating condition to its fault condition and to remain at the fault condition, when the sensor element has the fault state, until the reset means resets the system to the normal operating condition.

It will be apparent that polymeric PTC devices, ceramic PTC devices, other PTC devices such as bimetal devices, metallic PTC devices, arrangements of solid state devices with PTC characteristics, and devices displaying similar characteristics may be used in the circuit arrangements of this invention to provide reliable overcurrent protection. It will likewise be apparent to those of ordinary skill in the art that mechanical switches used in the circuit arrangements of this invention may include switches, relays, circuit breakers, isolators, bimetal devices and other devices. In addition, a solid state device or combination of solid state devices which provide disconnecting characteristics similar to those provided by mechanical switches may be used in place of the mechanical switches. Bimetal devices have also been referred to as bimetallic devices, electrothermal relays, thermally activated switches and/or electrothermal mechanisms with bimetal elements.

It will be apparent that in the preferred embodiments, this invention permits the use of PTC devices and bimetal switches to be arranged with mechanical switches and other electrical devices to provide reliable protection which protection was not previously available in the art. These and other features, objects and advantages will be understood or apparent to those of ordinary skill in the art from the following detailed description of the preferred embodiments of the invention as illustrated in the various drawing figures.

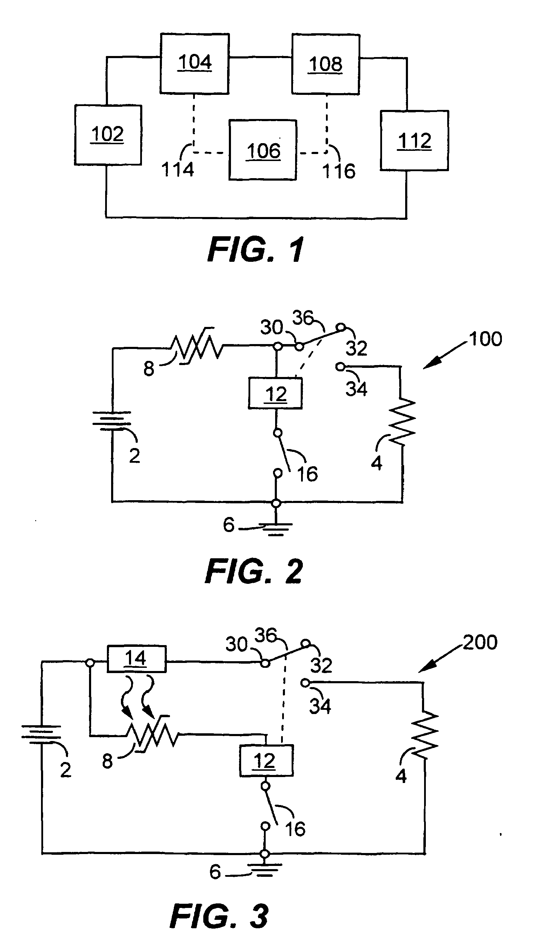

Overcurrent protection circuits arranged in accordance with the principles of this invention generally perform the functions of sensing the current, issuing a control signal to interrupt the circuit, interrupting the circuit and partially or completely isolating the load from the power source. The overcurrent protection circuits may be viewed as comprising operational elements which work cooperatively to perform the overcurrent protection functions. FIG. 1 is a block diagram showing an arrangement of such operational elements.

Five operational elements depicted in FIG. **1** are the source **102,** sensor element **104,** control element **106,** circuit interruption element **108** and load **112.** The source **102** provides the electrical power to the circuit, and the load **112** performs the intended purpose of the circuit. The sensor element **104** senses the current and determines whether the current delivered to the load **112** is within a normal acceptable range. When the sensor element **104** determines that the current delivered to the load **112** is excessive, the sensor element **104** informs the control element **106** via a first link **114** between the sensor **104** and control **106** elements. Based on information received from the sensor element **104,** the control element **106** controls the state of the circuit interruption element **108** via a second link **116** between the control **106** and interrupt **108** elements. The circuit interruption element **108** interrupts current in the circuit upon receipt of a control signal from the control element **106** when the sensor element **104** senses an overcurrent in the circuit.

FIG. **2** shows an example of an overcurrent protection arrangement of the invention **100.** The arrangement **100** in FIG. **2** comprises an electrical power source **2,** a load **4,** a PTC device **8,** a relay coil **12** with associated relay contacts **30 32 34 36** including a center contact **30,** a normally closed contact **32,** a normally open contact **34** and a wiper **36,** and an ON/OFF switch **16.** With the ON/OFF switch **16** initially open, the PTC device **8** in its low resistance state, and the wiper **36** against the normally closed contact **32,** the circuit **100** is in an open state and there is no current through the load **4.** When the ON/OFF switch **16** is closed, a small amount of current is drawn through the relay coil **12,** thereby energizing the relay coil **12** and causing the wiper **36** to move from the normally closed contact **32** to the normally open contact **34,** thereby placing the load **4** in the circuit. The PTC device **8** is placed in series with the parallel combination of the relay coil **12** and the load **4.** However, the relay coil **12** draws very little current to keep it energized. In case of an overcurrent, the resistance of the PTC device **8** increases, thereby reducing the current to the load **4** and the relay coil **12.** If the PTC device **8** is chosen properly, its resistance would increase sufficiently to reduce the current through the relay coil **12** enough to deenergize the relay coil **12** thereby causing the wiper **36** to move to the normally closed contact **32** and disconnect the load **4.** If the current through the PTC device **8** and relay coil is **12** sufficient to keep the PTC device **8** tripped in the high impedance state and the relay coil **12** deenergized, the circuit **100** remains in a fault state until the ON/OFF switch **16** is opened and the PTC device **8** allowed to cool. If the current through the PTC device **8** in the high impedance state is not sufficient to keep the PTC device **8** tripped, then the PTC device **8** would cool and reset to its low impedance state. This would allow the current through the relay coil **12** to increase and energize the relay coil **12,** thereby moving the wiper **36** to the normally open contact **34.** If the cause of the fault is still present, then the cycle would continue until the cause of the fault were removed or power were removed, e.g. by opening the ON/OFF switch **16.**

However, since the normal circuit current may be many hundred times the current drawn by the relay coil **12,** there is a potential for the PTC device **8** to increase in its resistance and reduce the current to the load **4,** but not reduce the current sufficiently to cause the relay coil **12** to deenergize. This could leave the circuit in a closed state with a fault condition. For example, a PTC device rated to carry 9 amps would typically carry a current of approximately .25 amps in the tripped state. Since a typical automotive relay coil current is .180 amps, even if the PTC device were tripped, there would still be sufficient current to keep the relay energized. Thus, circuit protection arrangements like that depicted in FIG. 2 would likely require the use of PTC devices with potentially quite precise tolerances.

Therefore, it would be preferred to have a circuit protection arrangement in which the PTC device is not placed in the circuit in a position in which the current to both the circuit load and the device controlling the circuit interruption device passes through the PTC device.

The circuit in FIG. **3** is an example of an overcurrent protection system in accordance with the first embodiment of the invention and the block diagram depicted in FIG. 1. FIG. **3** shows an overcurrent protection circuit **200** employing a certain arrangement of a PTC device **8** with a resistive device **14,** a relay coil **12,** a set of contacts **30 32 34 36** and an ON/OFF switch **16.** In the circuit **200,** the resistive device **14** is placed in series with the load **4** and the PTC device **8** is placed in series with the relay coil **12,** with the latter series combination connected across the power source **2.** With the ON/OFF switch **16** initially open, the PTC device **8** in its low resistance state, and the wiper **36** against the normally closed contact **32,** the circuit **200** is in an open state and there is no current through the load **4.** When the ON/OFF switch **16** is closed, a small amount of current is drawn through the PTC device **8** and the relay coil **12,** thereby energizing the relay coil **12** and causing the wiper **36** to move from the normally closed contact **32** to the normally open contact **34,** thereby placing the load **4** in the circuit. The resistive device **14** and the PTC device **8** are thermally linked, so that in case of an overcurrent in the circuit, the temperature of the resistive device **14** increases and causes the PTC device **8** to heat up to its trip temperature and change to its high impedance state. With the PTC device **8** in its high impedance state, the current through the relay coil **12** reduces, the relay coil **12** deenergizes and causes the wiper **36** to move back to the normally closed contact **32.** The resistive device **14** and PTC device 8 have a combined mass such that the trickle of current through the PTC device **8** and relay coil **12** is not sufficient to keep the temperature of the PTC device **8** high enough to keep the PTC device **8** in the tripped state. Thus, the resistive device **14** and PTC device **8** both cool. When the PTC device **8** cools sufficiently, it resets to its low impedance state and allows sufficient current to again flow through the relay coil **12** to energize the relay coil **12** and move the wiper **36** to the normally open contact **34.** If the cause of the overcurrent remains, the resistance device **14** will heat and the PTC device **8** will again trip to its high impedance state. This cycle continues until either the cause of the overcurrent is removed or power is removed, for example by opening the ON/OFF switch **16.**

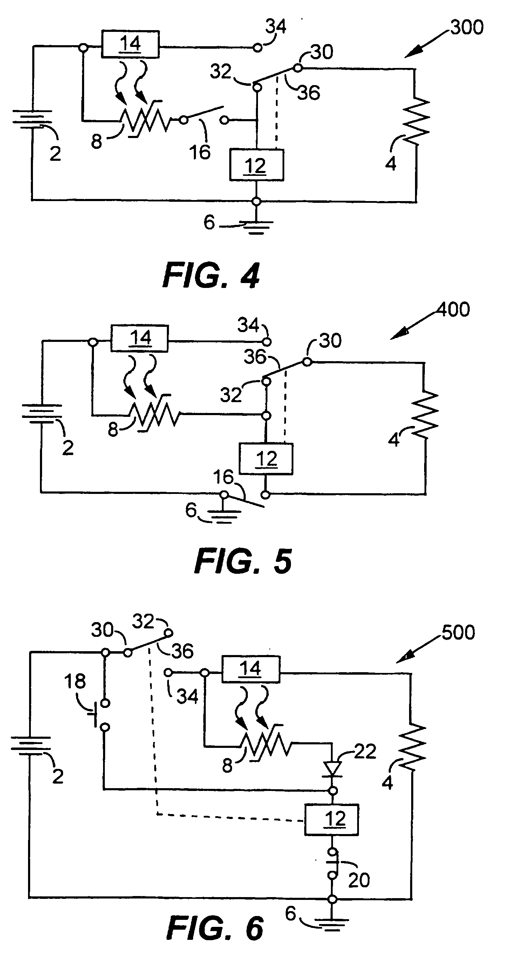

In some applications, it is preferred that the overcurrent protection circuit not attempt to reset itself, but rather latch open in a fault state. The circuit **300** in FIG. **4** is a second example of a circuit protection arrangement in accordance with the first embodiment of the invention, and is an overcurrent protection circuit which will latch open in the fault state. The circuit **300** employs an arrangement of a PTC device **8** with a resistive device **14,** a relay coil **12** and a set of relay contacts **30 32 34 36.** In the circuit **300,** the relay contacts **30 32 34** are "turned around" relative to their connection in the circuit **200** shown in FIG. **3****,** with the relay coil **12** connected to the normally closed contact **32,** the load **4** connected to the center contact **30,** and the normally open contact **34** is connected to the resistive element **14.** The circuit **300** is initially energized by closing the ON/OFF switch **16.** Current flows through the PTC device **8** and the relay coil **12.** The relay coil **12** energizes, causing the wiper **36** to move to the normally open contact **34.** This places the resistive element **14** in the current path with the load **4.** In the event of an overcurrent, the resistive element **14** heats up causing the PTC device **8** to heat up and trip. The relay coil **12** then deenergizes, causing the wiper **36** to return to the normally closed contact **32.** The load **4** remains in the circuit, however, with the PTC device **8** in its tripped state, the "trickle current" through the PTC device **8** and the parallel combination of the relay coil **12** and the load **4** is very little, but is sufficient to keep the PTC device **8** from returning to its low impedance state. The ON/OFF switch **16** would have to be opened to permit the PTC device **8** to cool and reset the circuit **300.**

The circuit **400** in FIG. **5** is a third example of a circuit protection arrangement in accordance with the first embodiment of the invention. The circuit **400** will also latch open in the fault state. The circuit **400** employs an arrangement of a PTC device **8** with a resistive device **14,** a relay coil **12** and a set of relay contacts **30 32 34 36,** and is similar to the circuit **300** shown in FIG. **4****.** The ON/OFF switch **16** has been moved to lie between ground **6** and the junction between the relay coil **12** and the load **4.** The operation of the circuit **400** shown in FIG. **5** is the same as for the circuit **300** shown in FIG. **4****.** However, in certain applications, e.g. in the automotive industry, it may be preferred to employ "ground switching" techniques as shown in FIG. **5****.**

The overcurrent protection circuits shown in FIGs. **4** and **5** are both capable of latching, i.e. not attempting to reset, when they are in a fault state. Both arrangements require a "trickle current" to keep them latched. In some applications it is preferred to have the overcurrent protection circuit latch open, but not require a trickle current to stay latched. For example, in automobile and other battery-powered applications, a trickle current could run down the battery if allowed to continue for an extended period of time. FIG. **6** shows a fourth example of a first embodiment of an overcurrent protection circuit **500** which will latch open in the fault state. However, unlike the circuits **300** 400 shown in FIGs. **4** and **5****,** respectively, the circuit **500** shown in FIG. **6** does not require a "trickle current" to latch the circuit open in case of an overcurrent. The circuit **500** employs an arrangement of a PTC device **8** with a resistive device **14,** a relay coil **12** and a set of relay contacts **30 32 34 36.** It also includes a diode **22,** a momentary ON switch **18** and a momentary OFF switch **20.** The relay contacts **30 32 34 36** are positioned between the power source **2** and the resistive element **14,** with the center contact **30** connected to the power source **2** and the normally open contact **32** connected to the resistive element **14.** With the circuit **500** in an OFF state, and the PTC device **8** in its low impedance state, the circuit **500** is turned on by momentarily pressing the ON switch **18.** Current flows through the relay coil **12,** energizing the relay coil **12** and causing the wiper **36** to move to the normally open contact **34.** The diode **22** prevents current from flowing up through the PTC device **8** to the resistive element **14** and the load **4.** With the ON switch **18** released, current flows through the resistive element **14** to the load **4,** and also through the series combination of the PTC device **8,** the diode **22** and the relay coil **12,** thereby keeping the relay coil **12** energized. In case of an overcurrent, the resistive element **14** heats up causing the PTC device **8** to heat up and trip to its high impedance state. The reduced current causes the relay coil **12** to deenergize and the wiper **36** to move to the normally closed contact **32.** Current ceases to flow in the circuit **500,** and the PTC device **8** cools and returns to its low resistance state. The momentary OFF switch **20** is used to turn the circuit OFF under normal operating conditions.

In each of the circuits shown in FIGs. **3****,** **4, 5** and **6****,** the PTC device **8** is shown connected so that it provides overcurrent protection to the respective circuit, but does not have to carry the load current. Thus in circuits protection arrangements according to the invention, a PTC device can be used to control a load current which is higher than the current rating of the PTC device.

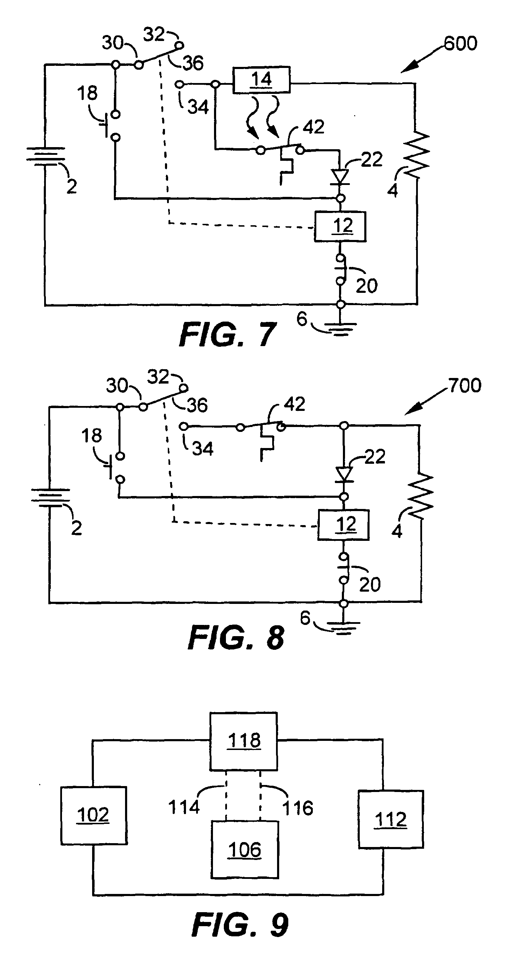

The circuit **600** shown in FIG. **7** is an alternate embodiment of the circuit shown in FIG. **6** in which the PTC device **8** is replaced by a bimetal switch **42.** With the circuit **600** in an OFF state, and the bimetal switch **42** in its closed state, the circuit **600** is turned on by momentarily pressing the ON switch **18.** Current flows through the relay coil **12,** energizing the relay coil **12** and causing the wiper **36** to move to the normally open contact **34.** The diode **22** prevents current from flowing up through the bimetal switch **42** to the resistive element **14** and the load **4.** With the ON switch **18** released, current flows through the resistive element **14** to the load **4,** and also through the series combination of the bimetal switch **42,** the diode **22** and the relay coil **12,** thereby keeping the relay coil **12** energized. In case of an overcurrent, the resistive element **14** heats up causing the bimetal switch **42** to heat up and trip to its open state. The relay coil **12** deenergizes and the wiper **36** moves to the normally closed contact **32.** Current ceases to flow in the circuit **600,** and the bimetal switch **42** cools and returns to its closed state. With the wiper **36** against the normally closed contact **32** and the relay coil **12** deenergized, the circuit **600** remains, i.e. latches, in the fault state and draws no "trickle current." The momentary OFF switch **20** is used to turn the circuit OFF under normal operating conditions.

FIG. **8** is a second example of an embodiment of an overcurrent protection circuit **700** employing a bimetal switch **42.** However, in the circuit **700** in FIG. **8****,** the bimetal switch **42** provides the functionality of the sensor element **104** (FIG. **1****),** and the relay **coil 12** and diode **22** provide the functionality of the control element **106** (FIG. 1). The circuit **700** employs an arrangement of a bimetal switch **42** with a relay coil **12** and a set of relay contacts **30 32 34 36.** It also includes a diode **22,** a momentary ON switch **18** and a momentary OFF switch **20.** The relay contacts **30 32 34 36** are positioned between the power source **2** and the bimetal switch **42,** with the center contact **30** connected to the power source **2** and the normally open contact **34** connected to the bimetal switch **42.** The circuit **700** is similar to the circuit **100** shown in FIG. **2****,** in that the bimetal switch **42** (PTC device **8** in FIG. **2****)** is in series with the parallel combination of the load **4** and relay coil **12.** With the circuit **700** in an OFF state, and the bimetal switch **42** in its closed state, the circuit **700** is turned on by momentarily pressing the ON switch **18.** Current flows through the relay coil **12,** energizing the relay coil **12** and causing the wiper **36** to move to the normally open contact **34.** The diode **22** prevents current from flowing back through the bimetal switch **42** or to the load **4.** With the ON switch **18** released, current flows through the bimetal switch **42** to the load **4,** and also through the series combination of the diode **22** and the relay coil **12,** thereby keeping the relay coil **12** energized. In case of an overcurrent, the bimetal switch **42** heats up and trips to its open state. The relay coil **12** deenergizes and the wiper **36** moves to the normally closed contact **32.** Current ceases to flow in the circuit **700,** and the bimetal switch **42** cools and returns to its closed state. The circuit **700** latches in the fault state with no current flowing in the circuit **700.** This circuit **700** has the advantage over the circuit **100** shown in FIG. **2** in that since the bimetal switch **42** opens when it heats up, rather than just increase in impedance, the bimetal switch **42** may be placed in series with both the relay coil **12** and the load **4** with confidence that the relay coil **12** will deenergize when the bimetal switch **42** opens. The momentary OFF switch 20 is used to turn the circuit OFF under normal operating conditions.

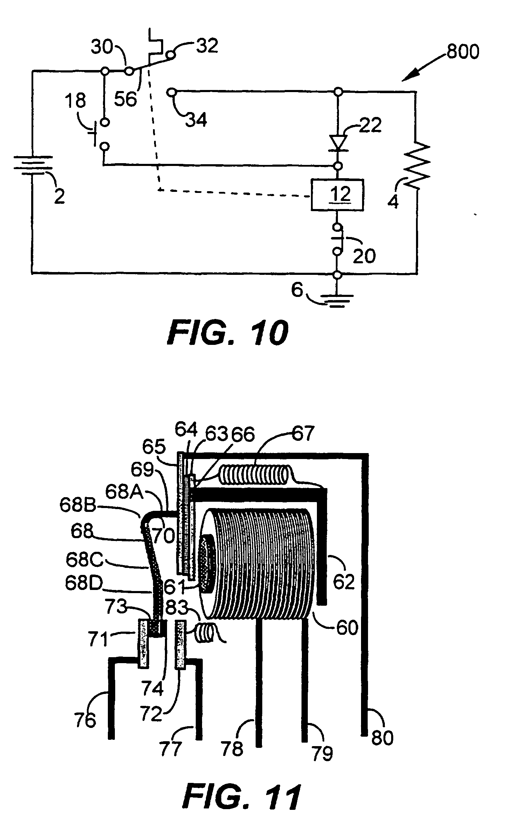

FIG. **9** is a block diagram similar to that shown in FIG. **1****,** however the functions of the sensor element **104** and circuit interruption element **118** have been combined into a sensor-interrupt element **118.** As will be seen below in relation to the circuit shown in FIG. **10****,** components within the sensor-interrupt element **118** can provide the functions of both the sensor element **102** and circuit interruption element **108** (FIG. **1****).** When the sensor-interrupt element **118** informs the control element **106** via the first link **114** that the current is excessive, the control-element **106** controls the state of the sensor-interrupt element via the second link **116.**

FIG. **10** is an example of an embodiment of an overcurrent protection circuit **800** employing a bimetal device, however, the relay contacts **(30 32 34 36** in FIG. 8) and bimetal switch **42** have been combined to form a set of relay contacts comprising a bimetal wiper 56. The structure and operation of the relay comprising a bimetal wiper will be described in relation to FIG. **11****.** The bimetal wiper **56** provides the functionality of the sensor element **104** (FIG. **1****),** the relay coil **12** and diode **22** provide the functionality of the control element **106** (FIG. **1****),** and the relay contacts **30 32 34 56,** including the bimetal wiper **56,** provide the functionality of the circuit interruption element **108** (FIG. **1****).** Thus, the relay contacts **30 32 34 56** provide the combined functionality of the sensor-interrupt element **118** shown in FIG. **9****.** With the circuit **800** in an OFF state, the bimetal wiper **56** in its normal state and is against the normally closed contact **32.** The circuit **800** is turned on by momentarily pressing the ON switch **18.** Current flows through the relay coil **12,** energizing the relay coil **12** and causing the bimetal wiper **56** to move to the normally open contact **34.** The diode **22** prevents current from flowing back through the relay contacts **34 56 30** or to the load **4.** With the ON switch **18** released, current flows through the bimetal wiper **56** to the load **4,** and also through the series combination of the diode **22** and the relay coil **12,** thereby keeping the relay coil **12** energized. In case of an overcurrent, the bimetal wiper **56** heats up and trips to its fault state thereby moving off the normally open contact **34.** The relay coil **12** deenergizes and the bimetal wiper **56** moves to the normally closed contact **32.** Current ceases to flow in the circuit **800,** and the bimetal wiper **56** cools and returns to its normal state. The tension from the relay spring **(67** FIG. **11****)** keeps the bimetal wiper against the normally closed contact **32.** The circuit **800** latches in the fault state with no current flowing. The momentary OFF switch **20** is used to turn the circuit OFF under normal operating conditions.

In FIGs. **6****,** **7****,** **8** and **10****,** both the momentary ON switch **18** and OFF switch **20** are shown as mechanical switches or buttons. However, either or both can be implemented, for example, with solid state devices or by supplying an electrical pulse from an external control unit.

The relays shown in the circuit diagrams in the various FIGs. may also comprise a fusing member within their respective structures to minimize the chance of catastrophic failure due to welding of the relay contacts.

The relay assembly shown in FIG. **11** represents a relay having a bimetal wiper. The configuration shown is a common relay configuration and is shown merely by way of example and is not intended to be limiting. Since relays are well known in the art, the structure and operation of the relay assembly depicted in FIG. **11** will be described only to the extent necessary to explain the use of a bimetal wiper. The assembly includes a relay coil **60** and a magnetic core **61** mounted on a first leg of an L-shaped support member **62.** A ferromagnetic arm **63** is hinged **66** to a distal end of a second leg of the support member **62.** The ferromagnetic arm **63** has a first face which is directed toward an end of the magnetic core **61.** An insulating layer **64** is sandwiched between a second face of the ferromagnetic arm **63** and a first face of a wiper support arm **65.** A bimetal wiper **68** is affixed, e.g. welded, to a second face of the wiper support arm 65. The bimetal wiper **68** is comprised of two dissimilar metal layers **69 70.** The shape of the bimetal wiper **68** will depend on the configuration of the particular relay. As an example, however, the shape of the bimetal wiper **68** depicted in FIG. **11** may be generally described in terms of four sections. The first wiper section **68A** is a substantially straight section, a first end of which is affixed, e.g. welded, to the wiper support arm **65.** The first wiper section **68A** is mounted substantially perpendicular to the wiper support arm **65.** The second wiper section **68B** is arcuate, and traces an arc slightly greater than one quarter circle. The third wiper section **68C** is substantially straight. The fourth wiper section **68D** is substantially straight, and makes an angle with the third wiper section **68C,** which angle is substantially 270 degrees minus the angle traced by the second wiper section **68B.** Thus, when the bimetal wiper **68** is cool, the fourth wiper section **68D** lies in a plane which is substantially parallel with the plane of the wiper support arm **65** thereby accommodating a normally open contact **71** and normally closed contact **72** which are mounted so that they also lie in planes which are substantially parallel with the plane of the wiper support arm **65.** In other relay configuration, the shape of the bimetal wiper **68** may vary from that described above in order to accommodate the specific requirements of each configuration.

First and second contact pads **73 74** are affixed to either face of a distal end of the bimetal wiper **68.** The first contact pad **73** is positioned opposite a normally closed contact **71** so that the two are held together in compression when the relay assembly is in a deenergized state (illustrated in FIG. **11****),** and the second contact pad **74** is positioned opposite a normally open contact **72** so that the two are held together in compression when the relay assembly is in an energized state (not illustrated). The normally closed **71** contact and normally open contact **72** are mounted so that they lie in planes substantially parallel with the wiper support arm **65** (as described above). A first spring **67,** having a first end attached to a first end of the ferromagnetic arm **63** and a second end attached to the support structure **62,** maintains tension on the first end of the ferromagnetic arm **63** thereby causing the ferromagnetic arm **63** to rotate about the hinge area **66,** thereby causing the distal end of the ferromagnetic arm **63** to tend to rotate away from the magnetic core **61,** thereby causing the assembly of the ferromagnetic arm **63,** wiper support arm **65** and bimetal wiper **68** to tend to rotate toward the normally closed contact **71** thereby bringing the first contact pad **73** in compression contact with the normally closed contact **71.**

First and second electrical leads **78 79** connect the relay coil **60** to an external power source (not illustrated). When power is applied to the relay coil **60,** the magnetic core **61** becomes magnetized attracting the ferromagnetic arm **63.** The ferromagnetic arm 63 rotates about the hinge **66** with the distal end of the ferromagnetic arm **63** rotating toward the magnetic core **61.** The motion of the ferromagnetic arm **63** causes the wiper support arm **65** and bimetallic wiper **68** to move in a like manner, thereby breaking the contact between the first contact pad **73** and the normally closed contact **71.** The assembly of the ferromagnetic arm **63,** wiper support arm **65** and bimetal wiper **68** continue to rotate until the ferromagnetic arm **63** rests against the magnetic core **61,** and the second contact pad **74** is held in compression contact against the normally open contact **72.**

The bimetal wiper **68** will retain its shape as long as the current through it is below a predetermined current level and/or the temperature of the bimetal wiper **68** is below a predetermined temperature. However, if the current through the bimetal wiper **68** should exceed the predetermined current level, thereby causing the temperature of the bimetal wiper **68** to exceed the predetermined temperature, then the bimetal wiper **68** will change its shape, tending to straighten out, thereby causing the distal end of the bimetal wiper **68** to move away from the normally open contact **72,** thereby causing the second contact pad **74** to break contact with the normally open contact **72.**

In some circumstances, heat generated during normal operation of the relay may tend to cause the bimetal wiper **68** to heat up and change its shape slightly. If the bimetal wiper **68** is in the normally closed position, the tension provided by the first spring **67** will keep the first contact pad **73** held in compression against the normally closed contact **71.** A second spring **83** is used to insure that the second contact pad **74** is held in compression against the normally open contact **72** with the relay in the energized position. A first end of the second spring **83** is fixed to the normally open contact **72.** A second end of the second spring **83** is attached to an insulated mount (not illustrated) within the relay assembly. The second spring **83** urges (tension or compression depending on how the second spring is mounted) the normally open contact **72** toward the wiper assembly, thereby assuring a good compression contact between the second contact pad **74** and the normally open contact **72** when the relay is energized. Although the second spring **83** is depicted as a coil spring, other suitable springs; e.g. leaf, may be used. Moreover, rather than attach a contact to a separate spring, the contact itself can be a spring, e.g. leaf, coil, etc., and thereby keep in compression contact with the wiper assembly.

FIG. 11 and the above description depict a relay assembly having a bimetal wiper configured to break contact with a normally open contact upon an overcurrent through the bimetal wiper. This is intended solely to be by way of example, and should not be interpreted as so limiting. Relay assemblies employing the bimetal wiper of the invention may be configured to have a wiper break contact with a normally closed contact, a normally open contact, or with whichever relay contact the wiper is making contact upon an overcurrent through the bimetal wiper.

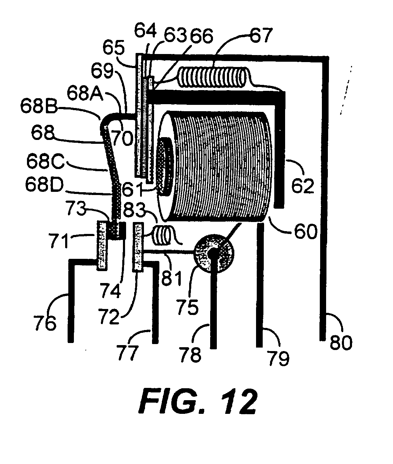

The circuit depicted in FIG. **10** employs the relay assembly depicted in FIG. **11** to advantage by placing the relay coil **12** in the current path which includes the wiper **56.** Thus, when the bimetal wiper **56** breaks contact with the normally open contact **34,** the relay coil **12** immediately deenergizes, causing the bimetal wiper **56** to move back to the normally closed contact **34,** and to remain there until the relay coil **12** is again energized. The relay assembly shown in FIG. **12** is the relay assembly shown in FIG. **11** with a diode **75** included in the assembly. The second electrical lead **78** is connected to the diode **75** (anode side illustrated) and the relay coil **60,** and a contact lead **81** connects the diode **75** (cathode side illustrated) with the normally open contact **72.** Thus, the key components of the circuit protection arrangement of FIG. **10****,** including the relay coil **12,** contacts **30 32 34,** bimetal wiper **56,** and diode **22** can be conveniently combined in a single relay package.

## Claims

1. An electrical protection system which can be connected between an electrical power supply (2) and an electrical load (4) to form an operating circuit, the operating circuit having an on state and an off state and comprising a current carrying line and a return line (6) and which when so connected protects the circuit from over currents, the system having a normal operating condition and a fault condition, and comprising:
a. a circuit interruption element (30, 32, 34, 36) which, when the system is so connected and is in its normal operating condition, is connected in series between the power supply and the load so that an operating current passes through the circuit interruption element and the load, and which has
i. a closed state (30, 36, 34) which permits the flow of a normal operating current between the power supply (2) and the load (4) when the system is in normal operating condition and
ii. an open state 30, 36, 32) which permits the flow of substantially no operating current, between the power supply and the load when the system is in the fault condition;
b. a sensor element (14) which, when the system is so connected and is in its normal operating condition, is connected in series with the circuit interruption element and the load so that the operating current passes through the circuit interruption element, the sensor element and the load and which has
i. a normal state, when the operating current in the system does not exceed the normal operating current by a predetermined amount, and
ii. a fault state, when the operating current in the system exceeds the normal operating current by the predetermined amount;
**characterized in that** it additionally comprises:
c. a control element (8, 12) which, when the system is so connected, is responsively coupled with the sensor element and is controllably coupled with the circuit interruption element (36), and has an electrical characteristic which
i. is low impedance when the sensor element is in the normal state,
ii. is high impedance when the sensor element has the fault state, and
iii. remains at high impedance until the system is reset to the normal operating condition; and
d. swith (16, 18) coupled to the control element for resetting the system from the fault condition to the normal operating condition;
the circuit interruption element (36) changing from its closed state to its open state, thereby causing the system to change from its normal operating condition to its fault condition and to remain at the fault condition, when the sensor element (14) has the fault state, until the switch (16,18) resets the system to the normal operating condition.

2. A system according to claim 1 wherein the sensor element comprises a heat-generating device, for generating heat in the fault state.

3. A system according to claim 2 wherein the circuit interruption element comprises a set of relay contacts (30, 32, 34, 36).

4. A system according to claim 3 wherein the control element comprises a series combination of
a. a PTC device (8) thermally coupled with the heat-generating device and having a low resistance providing the low impedance when the sensor element is in the normal state and having a high resistance providing the high impedance when the sensor element is in the fault state; and
b. a relay coil (12) coupled to operate the relay contacts;
the series combination being connected across the power supply between the current carrying line upstream of the sensor element (14) and load, and the return line, with the PCT device connected to the current carrying line and the relay coil coupled to the return line.

5. A system according to claim 4 wherein the switch (16, 18) comprises momentary make switch means in series between the current carrying line and the relay coil, when the system is in an off state, to change the operating system to an on state; and further comprising break switch means in series between the relay coil and the return line, when the system is in the on state, to change the system to the off state.

6. A system according to claim 4 wherein the circuit interruption element is connected between the sensor element and the load.

7. A system according to claim 6 wherein the switch (16, 18) comprises a normally open switch (16) connected in series between the PTC device (8) and the relay coil (12).

8. A system according to claim 6 wherein the switch (16, 18) comprises a normally closed switch connected in the return line between the power supply and the coil.

9. A system according to claim 5 wherein the control element comprises a diode connected in series between the PTC device and the relay coil to prevent operating current flowing through the momentary make switch means during a system reset operation when the momentary make switch means is momentarily closed.

10. A system according to claim 3 wherein:
a. the sensor element is connected between the circuit interruption element and the load; and
b. the control element comprises a series combination of
i. a bimetal switch thermally coupled with the sensor element and having substantially zero resistance providing said low impedance when the sensor is in its normal state and having substantially infinite resistance providing said high impedance when the sensor is in its fault state
ii. a diode, and
iii. a relay coil coupled to operate the relay contacts.

11. A system according to claim 3 wherein the sensor element comprises a bimetal switch connected in series between the circuit interruption element and the load, and wherein the control element includes a combination of a diode connected to a node between the bimetal switch and the load and a relay coil, connected to the return line.

12. A system according to claim 11 wherein the switch (16, 18) comprises momentary make switch means in series between the current carrying line and the relay coil, when the system is in an off state, to change the operating system to an on state; and further comprising break switch means in series between the relay coil and the return line when the operating system is in the on state, to change the system to the off state.

## Patentansprüche

1. Elektrisches Schutzsystem, das zwischen eine elektrische Stromversorgung (2) und eine elektrische Last (4) geschaltet werden kann, um einen Arbeitsstromkreis zu bilden, wobei der Arbeitsstromkreis einen Ein-Zustand und einen Aus-Zustand hat und eine Strom führende Leitung und eine Rückleitung (6) umfasst, und das, wenn es so geschaltet ist, die Schaltung vor Überströmen schützt, wobei das System einen normalen Betriebszustand und einen Fehlerzustand hat, und umfassend:
a. ein Schaltungsunterbrechungselement (30, 32, 34, 36), das, wenn das System so geschaltet ist und in seinen normalen Betriebszustand ist, in Reihe zwischen die Stromversorgung und die Last geschaltet ist, so dass ein Arbeitsstrom durch das Schaltungsunterbrechungselement und die Last fließt, und das aufweist:
i. einen geschlossenen Zustand (30, 36, 34), der den Fluss eines normalen Arbeitsstroms zwischen der Stromversorgung (2) und der Last (4) zulässt, wenn das System im normalen Betriebszustand ist, und
ii. einen offenen Zustand (30, 36, 32), der im Wesentlichen keinen Arbeitsstromfluss zwischen der Stromversorgung und der Last zulässt, wenn das System im Fehlerzustand ist;
b. ein Sensorelement (14), das, wenn das System so geschaltet ist und in seinem normalen Betriebszustand ist, in Reihe mit dem Schaltungsunterbrechungselement und der Last geschaltet ist, so dass der Arbeitsstrom durch das Schaltungsunterbrechungselement, das Sensorelement und die Last fließt, und das aufweist:
i. einen normalen Zustand, wenn der Arbeitsstrom im System den normalen Arbeitsstrom um einen vorbestimmten Betrag nicht überschreitet, und
ii. einen Fehlerzustand, wenn der Arbeitsstrom im System den normalen Arbeitsstrom um den vorbestimmten Betrag überschreitet;
**dadurch gekennzeichnet, dass** es zusätzlich umfasst:
c. ein Steuerungselement (8, 12), das, wenn das System so geschaltet ist, mit dem Sensorelement ansprechbar gekoppelt ist und mit dem Schaltungsunterbrechungselement (36) steuerbar gekoppelt ist, und eine elektrische Charakteristik hat, die
i. niederohmig ist, wenn das Sensorelement im normalen Zustand ist,
ii. hochohmig ist, wenn das Sensorelement den Fehlerzustand hat, und
iii. hochohmig bleibt, bis das System in den normalen Betriebszustand zurückgesetzt wird;
und
d. einen Schalter (16, 18), der mit dem Steuerungselement gekoppelt ist, zum Zurücksetzen des Systems aus dem Fehlerzustand in den normalen Betriebszustand;
wobei das Schaltungsunterbrechungselement (36) aus seinem geschlossenen Zustand in seinen offenen Zustand wechselt, wodurch bewirkt wird, dass das System aus seinem normalen Betriebszustand in seinen Fehlerzustand wechselt, wenn das Sensorelement (14) den Fehlerzustand hat, bis der Schalter (16, 18) das System in den normalen Betriebszustand zurücksetzt.

2. System nach Anspruch 1, wobei das Sensorelement ein Wärme erzeugendes Bauelement zur Erzeugung von Wärme im Fehlerzustand umfasst.

3. System nach Anspruch 2, wobei das Schaltungsunterbrechungselement einen Satz Relaiskontakte (30, 32, 34, 36) umfasst.

4. System nach Anspruch 3, wobei das Steuerungselement eine Reihenschaltung umfasst, bestehend aus:
a. einem PTC-Bauelement (8), das mit dem Wärme erzeugenden Bauelement thermisch gekoppelt ist und das einen niedrigen Widerstand hat, der die Niederohmigkeit bewirkt, wenn das Sensorelement im normalen Zustand ist, und das einen hohen Widerstand hat, der die Hochohmigkeit bewirkt, wenn das Sensorelement im Fehlerzustand ist; und
b. einer Relaisspule (12), die gekoppelt ist, um die Relaiskontakte zu betätigen;
wobei die Reihenschaltung über die Stromversorgung zwischen die Strom führende Leitung vor dem Sensorelement (14) und der Last und die Rückleitung geschaltet ist, wobei das PTC-Bauelement mit der Strom führenden Leitung verbunden ist und die Relaisspule mit der Rückleitung gekoppelt ist.

5. System nach Anspruch 4, wobei der Schalter (16, 18) ein Momentschaltermittel in Reihe zwischen der Strom führenden Leitung und der Relaisspule umfasst, um, wenn das System in einem Aus-Zustand ist, das Betriebssystem in einen Ein-Zustand umzustellen; und ferner umfassend ein Trennschaltermittel in Reihe zwischen der Relaisspule und der Rückleitung, um, wenn das System im Ein-Zustand ist, das System in den Aus-Zustand umzustellen.

6. System nach Anspruch 4, wobei das Schaltungsunterbrechungselement zwischen das Sensorelement und die Last geschaltet ist.

7. System nach Anspruch 6, wobei der Schalter (16, 18) einen normalerweise offenen Schalter (16) umfasst, der zwischen das PTC-Bauelement (8) und die Relaisspule (12) geschaltet ist.

8. System nach Anspruch 6, wobei der Schalter (16, 18) einen normalerweise geschlossenen Schalter umfasst, der in die Rückleitung zwischen die Stromversorgung und die Spule geschaltet ist.

9. System nach Anspruch 5, wobei das Steuerungselement eine Diode aufweist, die in Reihe zwischen das PTC-Bauelement und die Relaisspule geschaltet ist, um zu verhindern, dass Arbeitsstrom durch das Momentschaltermittel während eines Systemrücksetzvorgangs, wenn das Momentschaltermittel kurzzeitig geschlossen ist, fließt.

10. System nach Anspruch 3, wobei:
a. das Sensorelement zwischen das Schaltungsunterbrechungselement und die Last geschaltet ist; und
b. das Steuerungselement eine Reihenschaltung umfasst, bestehend aus
i. einem Bimetallschalter, der mit dem Sensorelement thermisch gekoppelt ist und der im Wesentlichen einen Widerstand von null hat, was die Niederohmigkeit bewirkt, wenn der Sensor in seinem normalen Zustand ist, und der im Wesentlichen einen unendlich großen Widerstand hat, was die Hochohmigkeit bewirkt, wenn der Sensor in seinem Fehlerzustand ist,
ii. einer Diode, und
iii. einer Relaisspule, die entsprechend gekoppelt ist, um die Relaiskontakte zu betätigen.

11. System nach Anspruch 3, wobei das Sensorelement einen Bimetallschalter umfasst, der in Reihe zwischen das Schaltungsunterbrechungselement und die Last geschaltet ist, und wobei das Steuerungselement eine Kombination aus einer Diode, die mit einem Knoten zwischen dem Bimetallschalter und der Last verbunden ist, und einer Relaisspule, die mit der Rückleitung verbunden ist, aufweist.

12. System nach Anspruch 11, wobei der Schalter (16, 18) ein Momentschaltermittel in Reihe zwischen der Strom führenden Leitung und der Relaisspule umfasst, um, wenn das System in einem Aus-Zustand ist, das Betriebssystem in einen Ein-Zustand umzustellen; und ferner umfassend ein Trennschaltermittel in Reihe zwischen der Relaisspule und der Rückleitung, um, wenn das Betriebssystem im Ein-Zustand ist, das System in den Aus-Zustand umzustellen.

## Revendications

1. Système de protection électrique qui peut être connecté entre une alimentation électrique (2) et une charge électrique (4) pour former un circuit de fonctionnement, le circuit de fonctionnement ayant un état activé et un état désactivé et comprenant une ligne de transport de courant et une ligne de retour (6) et qui, lorsqu'il est ainsi connecté, protège le circuit des surintensités, le système ayant une condition de fonctionnement normal et une condition de défaut, et comprenant :
a. un élément d'interruption de circuit (30, 32, 34, 36) qui, lorsque le système est ainsi connecté et est dans sa condition de fonctionnement normal, est connecté en série entre l'alimentation et la charge de sorte qu'un courant de fonctionnement passe à travers l'élément d'interruption de circuit et la charge, et qui a
i. un état fermé (30, 36, 34) qui permet la circulation d'un courant de fonctionnement normal entre l'alimentation (2) et la charge (4) lorsque le système est dans une condition de fonctionnement normal et
ii. un état ouvert (30, 36, 32) qui ne permet la circulation sensiblement d'aucun courant de fonctionnement entre l'alimentation et la charge lorsque le système est dans la condition de défaut ;
b. un élément de capteur (14) qui, lorsque le système est ainsi connecté et est dans sa condition de fonctionnement normal, est connecté en série avec l'élément d'interruption de circuit et la charge de sorte que le courant de fonctionnement passe à travers l'élément d'interruption de circuit, l'élément de capteur et la charge, et qui a
i. un état normal, lorsque le courant de fonctionnement dans le système ne dépasse pas le courant de fonctionnement normal d'une quantité prédéterminée, et
ii. un état de défaut, lorsque le courant de fonctionnement dans le système dépasse le courant de fonctionnement normal de la quantité prédéterminée ;
**caractérisé en ce qu'**il comprend en plus :
c. un élément de commande (8, 12) qui, lorsque le système est ainsi connecté, est couplé réactivement à l'élément de capteur et est couplé de manière commandable à l'élément d'interruption de circuit (36), et présente une caractéristique électrique qui
i. a une faible impédance lorsque l'élément de capteur est dans l'état normal,
ii. a une impédance élevée lorsque l'élément de capteur est dans l'état de défaut, et
iii. reste à une impédance élevée jusqu'à ce que le système soit réinitialisé dans la condition de fonctionnement normal ; et
d. un commutateur (16, 18) couplé à l'élément de commande pour réinitialiser le système de la condition de défaut dans la condition de fonctionnement normal ;
l'élément d'interruption de circuit (36) passant de son état fermé à son état ouvert, amenant de ce fait le système à passer de sa condition de fonctionnement normal à sa condition de défaut et à rester dans la condition de défaut, lorsque l'élément de capteur (14) est dans l'état de défaut, jusqu'à ce que le commutateur (16, 18) réinitialise le système dans la condition de fonctionnement normal.

2. Système selon la revendication 1, dans lequel l'élément de capteur comprend un dispositif de génération de chaleur pour générer de la chaleur dans l'état de défaut.

3. Système selon la revendication 2, dans lequel l'élément d'interruption de circuit comprend un ensemble de contacts de relais (30, 32, 34, 36).

4. Système selon la revendication 3, dans lequel l'élément de commande comprend une combinaison en série
a. d'un dispositif PTC (8) couplé thermiquement au dispositif de génération de chaleur et ayant une faible résistance fournissant la faible impédance lorsque l'élément de capteur est dans l'état normal et ayant une résistance élevée fournissant l'impédance élevée lorsque l'élément de capteur est dans l'état de défaut ; et
b. d'une bobine de relais (12) couplée pour actionner les contacts de relais ;
la combinaison en série étant connectée aux bornes de l'alimentation entre la ligne de transport de courant en amont de l'élément de capteur (14) et la charge, et la ligne de retour, le dispositif PTC étant connecté à la ligne de transport de courant et la bobine de relais étant couplée à la ligne de retour.

5. Système selon la revendication 4, dans lequel le commutateur (16, 18) comprend des moyens de commutation à fermeture momentanée en série entre la ligne de transport de courant et la bobine de relais, lorsque le système est dans un état désactivé, pour faire passer le système de fonctionnement dans un état activé ; et comprenant en outre des moyens formant commutateur de coupure en série entre la bobine de relais et la ligne de retour, lorsque le système est dans l'état activé, pour faire passer le système dans l'état désactivé.

6. Système selon la revendication 4, dans lequel l'élément d'interruption de circuit est connecté entre l'élément de capteur et la charge.

7. Système selon la revendication 6, dans lequel le commutateur (16, 18) comprend un commutateur normalement ouvert (16) connecté en série entre le dispositif PTC (8) et la bobine de relais (12).

8. Système selon la revendication 6, dans lequel le commutateur (16, 18) comprend un commutateur normalement fermé connecté dans la ligne de retour entre l'alimentation et la bobine.

9. Système selon la revendication 5, dans lequel l'élément de commande comprend une diode connectée en série entre le dispositif PTC et la bobine de relais pour empêcher qu'un courant de fonctionnement ne circule à travers les moyens de commutation à fermeture momentanée pendant une opération de réinitialisation du système lorsque les moyens de commutation à fermeture momentanée sont momentanément fermés.

10. Système selon la revendication 3, dans lequel :
a. l'élément de capteur est connecté entre l'élément d'interruption de circuit et la charge ; et
b. l'élément de commande comprend une combinaison série
i. d'un commutateur bimétallique couplé thermiquement à l'élément de capteur et ayant une résistance sensiblement nulle fournissant ladite faible impédance lorsque le capteur est dans son état normal et ayant une résistance sensiblement infinie fournissant ladite impédance élevée lorsque le capteur est dans son état de défaut,
ii. d'une diode, et
iii. d'une bobine de relais couplée pour actionner les contacts de relais.

11. Système selon la revendication 3, dans lequel l'élément de capteur comprend un commutateur bimétallique connecté en série entre l'élément d'interruption de circuit et la charge, et dans lequel l'élément de commande comprend une combinaison d'une diode connectée à un noeud entre le commutateur bimétallique et la charge et d'une bobine de relais connectée à la ligne de retour.

12. Système selon la revendication 11, dans lequel le commutateur (16, 18) comprend des moyens de commutation à fermeture momentanée en série entre la ligne de transport de courant et la bobine de relais, lorsque le système est dans un état désactivé, pour faire passer le système de fonctionnement dans un état activé ; et comprenant en outre des moyens formant commutateur de coupure en série entre la bobine de relais et la ligne de retour lorsque le système de fonctionnement est dans l'état activé, pour faire passer le système dans l'état désactivé.
